# EUROPEAN PATENT SPECIFICATION

(11) **EP 3 439 394 B1**
(45) Date of publication and mention of the grant of the patent: **16.03.2022**
(21) Application number: 17773317.7
(22) Date of filing: 31.03.2017
(51) Int. Cl.: H04W 72/04, H04W 4/00, H04W 4/70, H04W 4/44, H04W 76/14, H04W 36/00

(54) **RESOURCE CONFIGURATION METHODS AND DEVICES**
VERFAHREN UND VORRICHTUNGEN ZUR RESSOURCENKONFIGURATION
PROCÉDÉS ET DISPOSITIFS DE CONFIGURATION DE RESSOURCES

(30) Priority: 31.03.2016 CN 201610200136
(43) Date of publication of application: 06.02.2019
(73) Proprietor: ZTE Corporation, Shenzhen, Guangdong 518057 (CN)
(72) Inventor: WANG, Mengzhen, Shenzhen Guangdong 518057 (CN); CHEN, Lin, Shenzhen Guangdong 518057 (CN); CHEN, Yuqin, Shenzhen Guangdong 518057 (CN)
(74) Representative: Lavoix
(86) International application number: PCT/CN2017/079046
(87) International publication number: WO 2017/167287

(56) References cited:
- WO-A1-2015/113213
- WO-A1-2015/139609
- WO-A1-2016/015238
- WO-A1-2016/019691
- CN-A- 104 936 164
- CN-A- 105 338 548
- US-A1- 2013 308 598
- CATT: "Discussion on PC5/Uu transport for V2I/N services", 3GPP DRAFT; R3-152471, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Anaheim, USA; 20151116 - 20151120 6 November 2015 (2015-11-06), XP051026376, Retrieved from the Internet: URL:http://www.3gpp.org/ftp/tsg_ran/WG3_Iu /TSGR3_90/Docs/ [retrieved on 2015-11-06]

## Description

### TECHNICAL FIELD

The disclosure relates to the field of communications, and in particular to a methods and apparatuses for resource configuration.

### BACKGROUND

Vehicle-to-Everything Communications (V2X) refer to providing vehicle information through sensors, vehicle terminals and electronic tags mounted on vehicles, realizing Vehicle-to-Vehicle Communication (V2V), Vehicle-to-Pedestrian Communications (V2P), Vehicle-to-Infrastructure Communications (V2I) and Vehicle-to-Network Communications (V2N) by adopting various communication technologies, and making effective use of information such as information extraction and sharing through an information network platform to effectively control the vehicles and provide comprehensive services.

Currently, the 3rd Generation Partnership Project (3GPP) is discussing the V2X based on Long Term Evolution (LTE). Based on the other party participating in the communication, V2X services may be divided into a V2V service, a V2I service, a V2N service, and a V2P service. The V2P service refers to a service in which a V2P application is used for communication between User Equipments (UEs). The V2N service refers to a service in which a UE and a serving entity communicate with each other through an LTE network entity using a V2N application. The V2I service refers to a service in which a UE and a Road Side Unit (RSU) interact with each other through a V2I application. The RSU is an entity that supports the V2I service, may send the V2I service to a UE using a V2I application, or may receive the V2I service from the UE using the V2I service. The RSU may be implemented by an Evolved Node B (eNB) or a stationary UE. If the RSU is implemented by the eNB, it is called an eNB type RSU. If the RSU is implemented by a UE, it is called a UE type RSU.

The V2V service refers to a service in which a V2V application is used for communication between UEs. The V2V includes direct interaction of V2V-related application information between UEs, or an interaction of the V2V-related application information between UEs through an infrastructure (such as an RSU and an application server) supporting the V2X service due to the limitation of a V2V direct communication range.

In a V2V/V2P/V2I Internet-of-Vehicles communication mode, Internet-of-Vehicles information is transmitted mostly in broadcast and multicast mode. The existing base station system supports a broadcast mechanism based on MBSFN and SC-PTM. Moreover, a UE-to-UE direct discovery/communication (D2D, sidelink, ProSe) mechanism may also support the broadcast transmission of an Internet-of-Vehicles message through a PC5 interface. Due to a low latency characteristic of the V2X, it is essential for a UE performing V2X message transmission to ensure service continuity or reduce service interruption time in the event of a handover or an exception occurs. However, there is currently no effective solution to this problem.

WO 2015/139609 A1, paragraphs [0011]-[0013], [0019], [0022]-[0023], [0065]-[0077] and Fig. 3, discloses a method and device for indicating D2D related information and determining D2D transmission resource.

WO 2016/019691 A1, paragraphs [0030]-[0033] and Fig. 1, paragraphs [0055]-[0066] and Fig. 3, discloses a method, apparatus and system for configuring device-to-device resource pool.

"Discussion on PC5/Uu transport for V2I/N services", 3GPP Draft; R3-152471, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE; Anaheim, USA; 20151116 - 20151120, provides UE type RSU architecture for V2I.

### SUMMARY

Embodiments of the disclosure provide methods and apparatuses, to at least solve the problem in the related art of how to ensure the continuity of V2X service in the event of a handover or an exception occurs in a UE that performs V2X message transmission.

The invention is set out in the appended set of claims.

According to the embodiments of the disclosure, a first base station acquires a D2D communication resource of a second base station, and/or acquires its own D2D communication resource, and then sends the D2D communication resource to a UE, so that when a handover or an exception occurs in the UE, an Internet-of-Vehicles service may still be transmitted through a D2D interface, thus ensuring the continuity of a V2X service, and solving the problem in the related art of how to ensure the continuity of the V2X service in the event of a handover or an exception occurs in a UE that performs V2X message transmission, so as to achieve low-latency and high-reliability transmission of the Internet-of-Vehicles information.

### BRIEF DESCRIPTION OF DRAWINGS

The accompanying drawings described herein are used to provide a further understanding of the disclosure, and constitute a part of the present application. The exemplary embodiments of the disclosure and the description thereof are used to explain the disclosure, and do not constitute improper limitations to the disclosure. In the drawings:
FIG. 1 is a schematic diagram of a V2X service scenario in the related art.
FIG. 2 is a first flowchart of a resource configuration method according to an embodiment of the disclosure.
FIG. 3 is a second flowchart of a resource configuration method according to an embodiment of the disclosure.
FIG. 4 is a first structural block diagram of a resource configuration apparatus according to an embodiment of the disclosure.
FIG. 5 is a second structural block diagram of a resource configuration apparatus according to an embodiment of the disclosure.
FIG. 6 is a flowchart of a method for transmitting a V2X communication resource configuration during a handover process according to an alternative embodiment of the disclosure.
FIG. 7 is a flowchart of a method for obtaining, by a base station, a V2X communication resource of a neighboring base station through an X2 interface and sending the resource to a UE through a system broadcast message according to an alternative embodiment of the disclosure.
FIG. 8 is a flowchart of a method for sending, by a base station, a V2X communication exceptional transmission/reception resource pool in a system broadcast message according to an alternative embodiment of the disclosure.
FIG. 9 is a flowchart of a method for sending, by a base station, a V2X communication exceptional transmission/reception resource pool through proprietary signaling according to an alternative embodiment of the disclosure.

### DETAILED DESCRIPTION

The disclosure will be described in detail below with reference to the drawings in conjunction with the embodiments. It is to be noted that in the case of no conflict, the features in the embodiments and the embodiments in the present application may be combined with each other.

It is to be noted that the terms "first", "second" and the like in the specification, claims and the drawings of the disclosure are used to distinguish similar objects, and are not necessarily for describing a specific sequence or a chronological order.

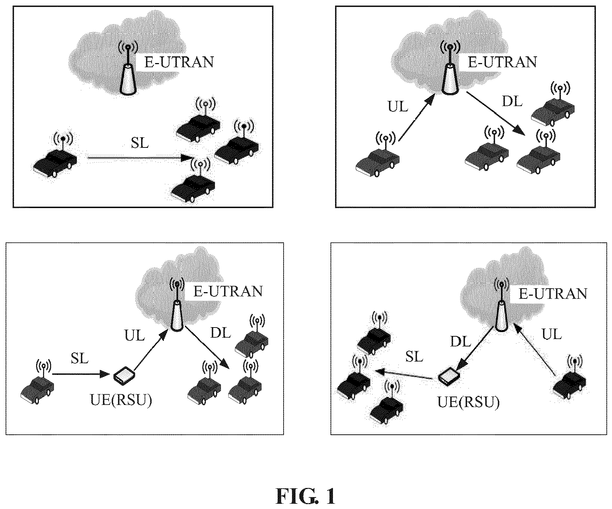

Three scenarios of V2V are discussed in 3GPP. FIG. 1 is a schematic diagram of a V2X service scenario in the related art. As shown in FIG. 1, there are three scenarios. In scenario 1 which supports V2V communication based only on a PC5 interface, the PC5 interface is also called a sidelink that is an interface between UEs, and is used for, but not limited to: D2D direct communication, D2D direct discovery, and Internet-of-Vehicles sidelink communication. A PC5 communication resource which is also called a sidelink communication resource or a D2D communication resource, includes, but not limited to, an Internet-of-Vehicles sidelink communication resource. A UE sends a V2X message to multiple UEs in a local area through the PC5 interface. In scenario 2 which supports V2V communication based only on a Uu interface (Evolved UMTS Terrestrial Radio Access Network (E-UTRAN) air interface), a UE uplinks a V2X message to an E-UTRAN, and the E-UTRAN broadcasts the V2X message to multiple UEs in a local area. Scenarios 3a and 3b support V2V communication using Uu and PC5 interfaces. In scenario 3a, a UE sends a V2X message to other UEs through a PC5 interface, after receiving the V2X message from the PC5 interface, a UE type RSU uplinks the V2X message to an E-UTRAN, and the E-UTRAN performs downlink broadcasting on the V2X message received from the UE type RSU to multiple UEs in a local area. In scenario 3b, a UE uplinks a V2X message to an E-UTRAN, after receiving the V2X message from a Uu interface, the E-UTRAN transmits the V2X message to one or more UE type RSUs, and the UE type RSU sends the V2X message received from the E-UTRAN to multiple UEs in a local area through the PC5 interface. The E-UTRAN may perform downlink broadcasting on the V2X message to multiple UEs in a local area through the existing Multimedia Broadcast Multicast Service (MBMS) technology or Single-Cell Point-To-Multipoint (SC-PTM) technology.

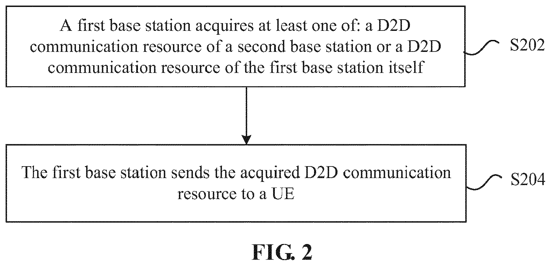

In the embodiment, a resource configuration method is provided. FIG. 2 is a first flowchart of a resource configuration method according to an embodiment of the disclosure. As shown in FIG. 2, the flow includes the steps as follows.

At S202, a first base station acquires at least one of the following D2D communication resources: a D2D communication resource of a second base station or a D2D communication resource of the first base station itself.

At S204, the first base station sends the acquired D2D communication resource to a UE.

By means of the steps S202 and S204 in the present embodiment, a first base station acquires a D2D communication resource of a second base station, and/or acquires its own D2D communication resource, and then sends the D2D communication resource to a UE, so that when a handover or an exception occurs in the UE, an Internet-of-Vehicles service may still be transmitted through the PC5 interface, thus ensuring the continuity of a V2X service, and solving the problem in the related art of how to ensure the continuity of the V2X service when a handover or an exception occurs in a UE that performs V2X message transmission, so as to achieve low-latency and high-reliability transmission of the Internet-of-Vehicles information.

It is to be noted that the D2D communication resource involved in the present embodiment includes an Internet-of-Vehicles communication resource, that is, the D2D communication resource in the present embodiment is used for V2X and/or D2D communication other than V2X. In other words, the D2D communication resource includes a V2X resource and/or a D2D communication resource other than the V2X resource.

The D2D communication resource for V2X involved in the present embodiment includes at least one of the following: a D2D communication transmission resource, a D2D communication transmission resource pool, a D2D communication reception resource pool, mandatory a D2D communication exceptional transmission resource pool, or a D2D communication exceptional reception resource pool. The D2D communication transmission resource is a base station scheduling resource, and the D2D communication transmission resource pool is an autonomously selected resource.

In an optional implementation of the embodiment, based on the above D2D communication resource, the manner in which the first base station acquires the D2D communication resource of the second base station involved in S202 of the embodiment may include at least one of the following manners.

Manner 1: the first base station acquires the D2D communication resource of the second base station through an X2 interface handover request acknowledgment message.

Manner 2: the first base station acquires the D2D communication resource of the second base station through an X2 interface establishment request message or an X2 interface establishment response message.

Manner 3: the first base station acquires the D2D communication resource of the second base station through a base station configuration update message of an X2 interface.

Manner 4: the first base station acquires the D2D communication resource of the second base station through an MME configuration update message of an S1 interface or an S1 establishment request message or an S1 handover command message.

The above manner 1 to manner 4 describe in detail how the first base station acquires the D2D communication resource of the second base station in the embodiment. The D2D communication resource is then sent to a UE in a specific application scenario, so that the UE may obtain a PC5 resource of the second base station/neighboring cell.

In another optional implementation of the embodiment, the manner in which the first base station sends the acquired D2D communication resource to a UE involved in S204 of the embodiment may include that: the first base station sends the acquired D2D communication resource to the UE through an RRC connection reconfiguration message; or the first base station sends the acquired D2D communication resource to the UE through a system broadcast message.

In a specific implementation of the embodiment, the manner in which the first base station sends the D2D communication resource of the target base station to the UE through the RRC connection reconfiguration message may include that: the first base station sends the D2D communication resource of the target base station contained in a handover command to the UE through the RRC connection reconfiguration message.

It is to be noted that the system broadcast message involved in the embodiment includes at least one of the following: SIB18 or a newly defined SIB.

Furthermore, before the first base station sends the acquired D2D communication resource to a UE in S204 of the embodiment, the method of the embodiment further includes that: the first base station receives indication information about an interest in a PC5 Internet-of-Vehicles transmission or indication information of PC5 path switch sent by the UE.

It is to be noted that the UE involved in the embodiment may include at least one of the following: a vehicle UE, a pedestrian UE, a UE type RSU, or a UE having D2D communication capability. The first base station and the second base station involved in the embodiment include at least one of the following: a traditional base station or a base station type RSU.

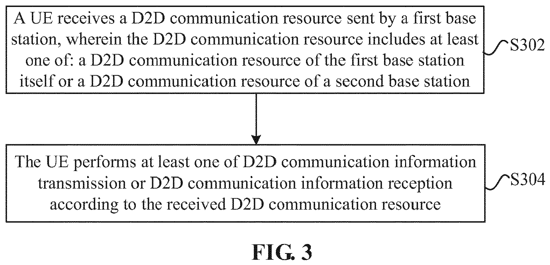

FIG. 3 is a second flowchart of a resource configuration method according to an embodiment of the disclosure. As shown in FIG. 3, the method includes the steps as follows.

At S302, a UE receives a D2D communication resource sent by a first base station, and the D2D communication resource includes at least one of the following: a D2D communication resource of the first base station itself or a D2D communication resource of a second base station.

At S304, the UE performs at least one of the following operations according to the received D2D communication resource: D2D communication information transmission, or D2D communication information reception.

By means of steps S302 to S304 in the above embodiment, a UE may obtain a PC5 resource of the second base station/neighboring cell.

It is to be noted that the D2D communication resource involved in the embodiment includes at least one of the following: a D2D communication transmission resource or a D2D communication transmission resource pool, a D2D communication reception resource or a D2D communication reception resource pool, mandatory a

D2D communication exceptional transmission resource pool, or a D2D communication exceptional reception resource pool.

In the present embodiment, the operation that the UE performs at least one of the following operations according to the received D2D communication resource: D2D communication information transmission, or D2D communication information reception involved in S304 of the present embodiment is implemented through the following manners: the UE uses the D2D communication exceptional transmission or reception resource pool of the first base station and/or the second base station under any one of the following conditions: a wireless link failure in the UE, running of T310, running of T304, a handover failure in the UE or timeout of T304, cell re-selection of the UE or running of T311, RRC connection re-establishment of the UE or running of T301, running of T300, or RRC connection establishment of the UE or a connection establishment failure caused by timeout of T300.

In addition, before a UE receives a D2D communication resource in step S304 of the present embodiment, the method of the present embodiment further includes that: the UE sends indication information of PC5 path switch or indication information about an interest in a PC5 Internet-of-Vehicles transmission to the first base station.

The UE sends the indication information of PC5 path switch or the indication information about an interest in a PC5 Internet-of-Vehicles transmission to the first base station through sidelinkUEInformation.

From the description of the above embodiment, those skilled in the art can clearly understand that the method according to the above embodiment may be implemented by means of software plus a necessary general hardware platform, and of course, may also be implemented through hardware, but in many cases, the former is a better implementation manner. Based on such understanding, the technical solution of the disclosure, or the part that making a contribution to the conventional art, may be embodied in the form of a software product, which is stored in a storage medium (such as a ROM/RAM, a magnetic disk and an optical disc), and includes a number of instructions for causing a terminal device (which may be a mobile phone, a computer, a server, or a network device, etc.) to perform the methods described in various embodiments of the disclosure.

In an embodiment, a resource configuration apparatus is also provided. The apparatus is used to implement the above embodiment and preferred implementations, and those have not been described will not be elaborated. As used below, the term "module" may be implemented as a combination of software and/or hardware for a predetermined function. Although the apparatus described in the following embodiments is preferably implemented in software, hardware, or a combination of software and hardware, is also possible and contemplated.

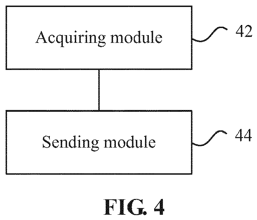

FIG. 4 is a first structural block diagram of a resource configuration apparatus according to an embodiment of the disclosure. The apparatus is applied to the first base station. As shown in FIG. 4, the apparatus includes an acquiring module 42 and a sending module 44. The acquiring module 42 is configured to acquire at least one of the following D2D communication resources: a D2D communication resource of a second base station or a D2D communication resource of the first base station itself. The second base station includes a target base station or a neighboring base station of the first base station. The sending module 44 is coupled to the acquiring module 42, and configured to send the acquired D2D communication resource to a UE.

Optionally, the acquiring module 42 includes: a first acquiring unit, configured to acquire the D2D communication resource of the target base station or the neighboring base station through an X2 interface handover request acknowledgment message or an X2 interface establishment request message or an X2 interface establishment response message or a base station configuration update message of an X2 interface; or, a second acquiring unit, configured to acquire the D2D communication resource of the second base station through an MME configuration update message of an S1 interface or an S1 establishment request message or an S1 handover command message.

Optionally, the sending module 44 includes: a first sending unit, configured to send the acquired D2D communication resource to the UE through an RRC connection reconfiguration message; or, a second sending unit, configured to send the acquired D2D communication resource to the UE through a system broadcast message. Optionally, the system broadcast message may be one of the following: SIB18 or a newly defined SIB. In addition, in a specific application scenario, the first sending unit is further configured to send the D2D communication resource of the target base station provided in a handover command to the UE through an RRC connection reconfiguration message.

Optionally, the present embodiment may further include: a receiving module, configured to receive, before the first base station sends the acquired D2D communication resource to the UE, indication information about an interest in a PC5 Internet-of-Vehicles transmission or indication information of PC5 path switch, sent by the UE.

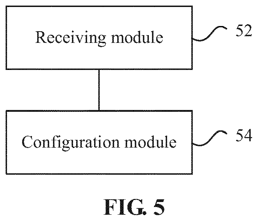

FIG. 5 is a second structural block diagram of a resource configuration apparatus according to an embodiment of the disclosure. The apparatus is applied to a UE. As shown in FIG. 5, the apparatus includes a receiving module 52 and a configuration module 54. The receiving module 52 is configured to receive a D2D communication resource sent by a first base station. The D2D communication resource includes at least one of the following: a D2D communication resource of the first base station itself or a D2D communication resource of a second base station. The second base station includes a target base station or a neighboring base station of the first base station. The configuration module 54 is coupled to the receiving module 52, and configured to perform at least one of the following operations according to the received D2D communication resource: D2D communication information transmission, or D2D communication information reception.

The receiving module 52 uses the D2D communication exceptional transmission or reception resource pool of the first base station and/or the second base station under any one of the following conditions: a wireless link failure in the UE, running of T310, running of T304, a handover failure in the UE or timeout of T304, cell re-selection of the UE or running of T311, RRC connection re-establishment of the UE or running of T301, running of T300, or RRC connection establishment of the UE or a connection establishment failure caused by timeout of T300.

Optionally, the present embodiment further includes: a second sending module, configured to send, before the UE receives the D2D communication resource of the first base station and/or the second base station acquired by the first base station, indication information of PC5 path switch or indication information about an interest in a PC5 Internet-of-Vehicles transmission to the first base station. Indication information of PC5 path switch or indication information about an interest in a PC5 Internet-of-Vehicles transmission may be sent to the first base station through sidelinkUEInformation.

It is to be noted that each of the above modules may be implemented by software or hardware. For the latter, the above modules may be implemented by, but not limited to, the following manners that the above modules are all located in a same processor; or, the above modules are located in multiple processors respectively.

The disclosure will be exemplified in the following with reference to optional embodiments of the disclosure. V2X is taken as an example, and the D2D communication resource is a PC5 communication resource for Internet-of-Vehicles PC5 communication.

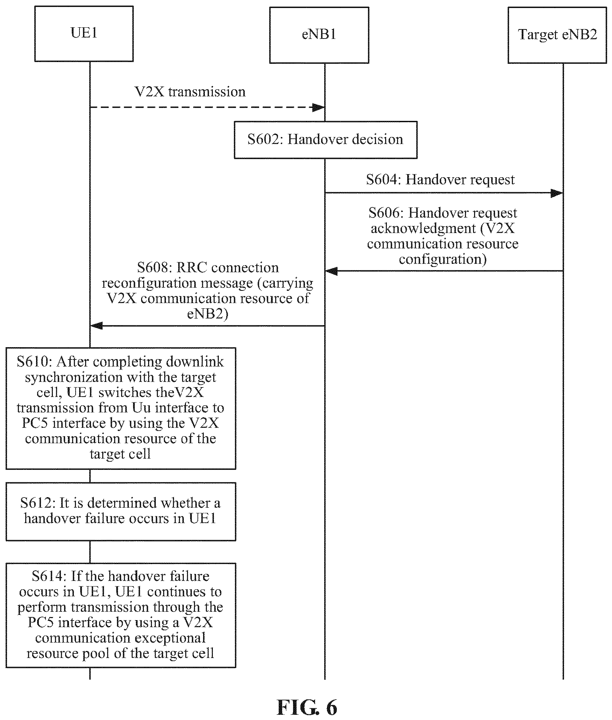

First optional example
FIG. 6 is a flowchart of a method for transmitting a V2X communication resource configuration during a handover process according to an alternative embodiment of the disclosure. The method is an embodiment in which UE1 performs V2X transmission through a Uu interface. As shown in FIG. 6, the method includes the steps as follows.

At S602, a source base station eNB1 determines to perform handover based on an X2 interface according to radio resource management information and a measurement report reported by a device unit.

At S604, the source base station selects a target base station, and sends a handover request message to the target base station.

The handover request may carry indication information about an interest in a V2X transmission.

At S606, the target base station sends a handover request acknowledgment message to the source base station, and a handover command that triggers the device unit to perform handover carries a PC5 communication resource.

The PC5 communication resource includes any one or combination of the following: a V2X transmission resource/resource pool, a V2X reception resource pool, a V2X exceptional transmission resource pool, and a V2X exceptional reception resource pool. In addition, in the present optional example, the PC5 communication resource may include: a V2X transmission/reception resource (scheduling resource), and a V2X exceptional transmission/reception resource pool.

At S608, the base station transparently transmits the handover command (carrying the PC5 communication resource) to the UE through an RRC connection reconfiguration message.

At S610, after completing downlink synchronization with a target cell, UE1 uses the V2X communication resource of the target cell to switch the V2X transmission from Uu interface to PC5 interface.

At S612, it is determined whether the handover occurs at UE1.

At S614, if a handover failure occurs at UE1, the V2X communication exceptional transmission/reception resource pool of the target cell is used by UE1 to continue to perform V2X transmission through the PC5 interface. This avoids V2X service interruption and guarantees service continuity until UE1 reselects a cell and re-establishes to the new cell.

If Internet-of-Vehicles resource configuration information carried in the handover command is a V2X transmission/reception resource pool (autonomously selected resource), even though the handover command also carries a V2X exceptional transmission/reception resource pool, when the handover failure occurs at a UE, the UE may still continue to use the V2X transmission/reception resource pool (autonomously selected resource) to perform V2X transmission through PC5 without switching to the V2X exceptional transmission/reception resource pool.

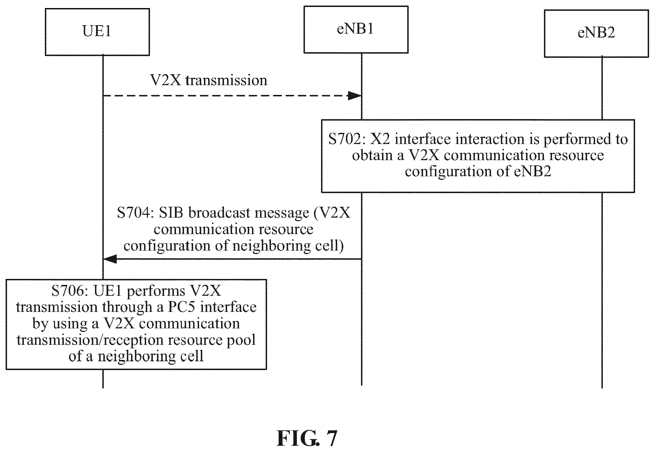

Second optional example
FIG. 7 is a flowchart of a method for obtaining, by a base station, a V2X communication resource of a neighboring base station through an X2 interface and sending the resource to a UE through a system broadcast message according to an alternative embodiment of the disclosure. As shown in FIG. 7, the method includes the steps as follows.

At S702, eNB1 interacts with eNB2 through X2 interface signaling to obtain V2X communication resource configuration of eNB2.

For example, eNB1 may acquire the V2X communication resource configuration of eNB2 through an X2 interface establishment request or an X2 establishment response message, or eNB 1 obtains a PC5 communication resource of eNB2 through a base station configuration update message of an X2 interface.

At S704, eNB1 sends the V2X communication resource configuration information of the neighboring cell eNB2 to UE1 through a system broadcast message.

The system broadcast message may be SIB18 used by ProSe communication or a new SIB defined for V2X.

At S706, UE1 receives the V2X communication resource configuration information of the neighboring cell, and performs V2X transmission through the PC5 interface by using a V2X communication transmission/reception resource pool of the neighboring cell.

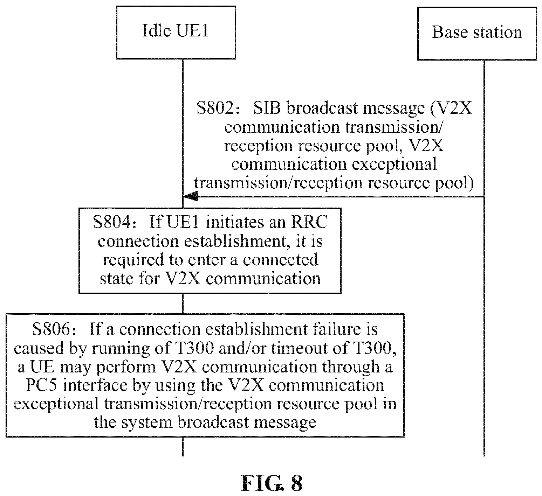

Third optional example
FIG. 8 is a flowchart of a method for sending, by a base station, a V2X communication exceptional transmission/reception resource pool in a system broadcast message according to an alternative embodiment of the disclosure. As shown in FIG. 8, the method includes the steps as follows.

At S802, a base station sends a V2X communication exceptional transmission/reception resource pool of a serving cell to UE1 in a system broadcast message.

At S804, if UE1 initiates an RRC connection establishment, it is required to enter a connected state for V2X communication.

At S806, if T300 is running and/or a connection establishment failure is caused by timeout of T300, a UE may perform V2X communication through a PC5 interface by using the V2X communication exceptional transmission/reception resource pool in the system broadcast message.

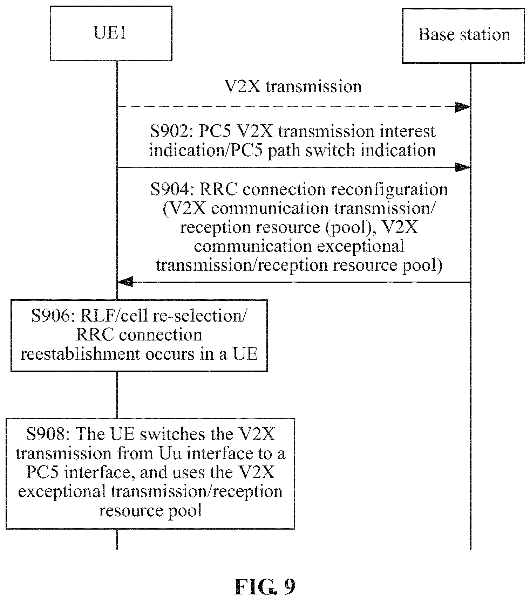

Fourth optional example
FIG. 9 is a flowchart of a method for sending, by a base station, a V2X communication exceptional transmission/reception resource pool through proprietary signaling according to an alternative embodiment of the disclosure. The method is that UE1 performs V2X transmission through a Uu interface. As shown in FIG. 9, the method includes the steps as follows.

At S902, UE1 sends indication information about an interest in a PC5 Internet-of-Vehicles transmission or indication information of PC5 path switch to a base station.

The indication information about an interest in PC5 Internet-of-Vehicles transmission or the indication information of PC5 path switch is used to indicate to the base station that UE1 transmits a V2X message through a Uu interface, and is interested in switching to a PC5 interface to perform V2X transmission. UE1 sends the indication information of PC5 path switch or the indication information about an interest in PC5 Internet-of-Vehicles transmission to the base station through sidelinkUEInformation.

At S904, the base station sends a V2X communication transmission/reception resource (pool) and a V2X communication exceptional transmission/reception resource pool to UE1 through an RRC connection reconfiguration message.

At S906, a RLF/Cell re-selection/RRC connection reestablishment occurs in the UE.

At S908, the UE switches the V2X transmission from the Uu interface to the PC5 interface, and uses the V2X exceptional transmission/reception resource pool. When T310 is running, or when UE1 performs cell selection/re-selection or T311 is running, or when UE1 performs RRC connection re-establishment or T301 is running, in order to avoid V2X service interruption, UE1 may switch the V2X transmission from the Uu interface to the PC5 interface, and use the V2X communication exceptional transmission/reception resource pool received from the RRC connection reconfiguration message to perform V2X communication through the PC5 interface.

An embodiment of the disclosure also provides a storage medium. Alternatively, in the present embodiment, the storage medium may be configured to store program codes for performing the steps as follows.

At S11, a first base station acquires at least one of the following PC5 communication resources: a PC5 communication resource of a second base station, or a PC5 communication resource of the first base station. The second base station includes: a target base station, or a neighboring base station of the first base station.

At S12, the first base station sends the acquired PC5 communication resource to a UE.

An embodiment of the disclosure also provides a storage medium. Alternatively, in the present embodiment, the storage medium may be configured to store program codes for performing the steps as follows.

At S21, a UE receives a PC5 communication resource sent by a first base station, wherein the PC5 communication resource includes at least one of the following: a PC5 communication resource of the first base station itself, or a PC5 communication resource of a second base station, and the second base station includes a target base station or a neighboring base station of the first base station.

At S22, the UE performs at least one of the following operations through a PC5 interface according to the received PC5 communication resource: transmission

It is apparent that a person skilled in the art shall understand that all of the above-mentioned modules or steps in the disclosure may be implemented by using a general calculation device, may be centralized on a single calculation device or may be distributed on a network composed of multiple calculation devices. Optionally, they may be implemented by using executable program codes of the calculation devices. Thus, they may be stored in a storage device and executed by the calculation devices, the shown or described steps may be executed in a sequence different from this sequence under certain conditions, or they may be manufactured into individual integrated circuit modules respectively, or multiple modules or steps therein may be manufactured into a single integrated circuit module. Thus, the disclosure is not limited to the combination of any specific hardware and software.

### INDUSTRIAL APPLICABILITY

During the resource configuration process in the embodiments of the disclosure, a first base station acquires a D2D communication resource of a second base station, and/or acquires its own D2D communication resource, and then sends the D2D communication resource to a UE, so that when a handover or an exception occurs in the UE, an Internet-of-Vehicles service may still be transmitted, thus ensuring the continuity of a V2X service, and solving the problem of how to ensure the continuity of the V2X service when a handover or an exception occurs in a UE that performs V2X message transmission, so as to achieve low-latency and high-reliability transmission of the Internet-of-Vehicles information.

## Claims

1. A method for resource configuration, being applied to Vehicle-to-Everything communications, V2X, and comprising:
acquiring (S202), by a first base station, a Device-to-Device, D2D, communication resource of a second base station or a D2D communication resource of the first base station itself, wherein the D2D communication resource is a PC5 communication resource used for the V2X; and
sending (S204), by the first base station, the acquired D2D communication resource to a User Equipment, UE;
wherein the D2D communication resource comprises a D2D communication exceptional transmission resource pool;
wherein the D2D communication exceptional transmission resource pool is for use by the UE under any one of the following conditions: a wireless link failure in the UE, running of T310, running of T304, a handover failure in the UE or timeout of T304, cell re-selection of the UE or running of T311, Radio Resource Control, RRC, connection re-establishment of the UE or running of T301, running of T300, or RRC connection establishment of the UE or a connection establishment failure caused by timeout of T300.

2. The method of claim 1, wherein the acquiring, by the first base station, the D2D communication resource of the second base station comprises:
acquiring, by the first base station, the D2D communication resource of the second base station through an X2 interface handover request acknowledgment message; or
acquiring, by the first base station, the D2D communication resource of the second base station through an X2 interface establishment request or an X2 interface establishment response message; or
acquiring, by the first base station, the D2D communication resource of the second base station through a base station configuration update message of an X2 interface; or
acquiring, by the first base station, the D2D communication resource of the second base station through a Mobility Management Entity, MME, configuration update message of an S1 interface or an S1 establishment request message or an S1 handover command message.

3. The method of claim 1, wherein the sending, by the first base station, the acquired D2D communication resource to the UE comprises:
sending, by the first base station, the acquired D2D communication resource to the UE through a RRC connection reconfiguration message; or
sending, by the first base station, the acquired D2D communication resource to the UE through a system broadcast message, wherein the system broadcast message comprises at least one of: a system message SIB18 or a newly defined system message.

4. The method of claim 3, wherein the sending, by the first base station, the acquired D2D communication resource to the UE through the RRC connection reconfiguration message comprises:
sending, by the first base station, the D2D communication resource acquired from an X2 interface handover request acknowledgment message and contained in a handover command to the UE through the RRC connection reconfiguration message.

5. The method of claim 1, further comprising:
before sending, by the first base station, the acquired D2D communication resource to the UE,
receiving, by the first base station, indication information about an interest in a D2D Internet-of-Vehicles transmission or indication information of D2D path switch, sent by the UE.

6. The method of any one of claims 1 to 5, wherein the UE comprises at least one of:
a vehicle UE, a pedestrian UE, a UE type Road Side Unit, RSU, or a UE having D2D communication capability, and/or wherein the first base station and the second base station comprise at least one of: a traditional base station or a base station type Road Side Unit, RSU.

7. A method for resource configuration, being applied to Vehicle-to-Everything communications, V2X, and comprising:
receiving (S302), by a User Equipment, UE, a Device-to-Device, D2D, communication resource sent by a first base station, wherein the D2D communication resource comprises a D2D communication resource of the first base station itself or a D2D communication resource of a second base station, wherein the D2D communication resource is a PC5 communication resource used for the V2X; and
performing (S304), by the UE, D2D communication information transmission and/or D2D communication information reception according to the received D2D communication resource;
wherein the D2D communication resource comprises a D2D communication exceptional transmission resource pool;
wherein the performing, by the UE, D2D communication information transmission and/or D2D communication information reception according to the received D2D communication resource comprises:
utilizing, by the UE, the D2D communication exceptional transmission resource pool under any one of the following conditions:
a wireless link failure in the UE, running of T310, running of T304, a handover failure in the UE or timeout of T304, cell re-selection of the UE or running of T311, Radio Resource Control, RRC, connection re-establishment of the UE or running of T301, running of T300, or RRC connection establishment of the UE or a connection establishment failure caused by timeout of T300.

8. The method of claim 7, further comprising:
before receiving, by the UE, the D2D communication resource sent by the first base station,
sending, by the UE, indication information of D2D path switch or indication information about an interest in a D2D Internet-of-Vehicles transmission to the first base station.

9. The method of claim 8, wherein the UE sends the indication information of D2D path switch or the indication information about an interest in a D2D Internet-of-Vehicles transmission to the first base station through sidelinkUEinformation.

10. An apparatus for resource configuration, the apparatus configured to be applied to a first base station, the resource configuration applicable to Vehicle-to-Everything communications, V2X, and the apparatus comprising: an acquiring module (42), configured to acquire a Device-to-Device, D2D, communication resource of a second base station or a D2D communication resource of the first base station itself, wherein the D2D communication resource is a PC5 communication resource used for the V2X; and a sending module (44), configured to send the acquired D2D communication resource to a User Equipment, UE, wherein the D2D communication resource comprises a D2D communication exceptional transmission resource pool; wherein the D2D communication exceptional transmission resource pool is for use by the UE under any one of the following conditions: a wireless link failure in the UE, running of T310, running of T304, a handover failure in the UE or timeout of T304, cell re-selection of the UE or running of T311, Radio Resource Control, RRC, connection re-establishment of the UE or running of T301, running of T300, or RRC connection establishment of the UE or a connection establishment failure caused by timeout of T300.

11. An apparatus for resource configuration, the apparatus configured to be applied to a User Equipment, UE, the resource configuration applicable to Vehicle-to-Everything communications, V2X, and the apparatus comprising:
a receiving module (52), configured to receive a Device-to-Device, D2D, communication resource sent by a first base station, wherein the D2D communication resource comprises a D2D communication resource of the first base station itself or a D2D communication resource of a second base station, wherein the D2D communication resource is a PC5 communication resource used for the V2X; and
a configuration module (54), configured to perform D2D communication information transmission and/or D2D communication information reception according to the received D2D communication resource,
wherein the D2D communication resource comprises a D2D communication exceptional transmission resource pool;
wherein the operation of the configuration module (54) of performing D2D communication information transmission and/or D2D communication information reception according to the received D2D communication resource comprises:
utilizing the D2D communication exceptional transmission resource pool under any one of the following conditions: a wireless link failure in the UE, running of T310, running of T304, a handover failure in the UE or timeout of T304, cell re-selection of the UE or running of T311, Radio Resource Control, RRC, connection re-establishment of the UE or running of T301, running of T300, or RRC connection establishment of the UE or a connection establishment failure caused by timeout of T300.

## Patentansprüche

1. Verfahren zur Ressourcenkonfiguration, das auf die Kommunikation Fahrzeug-zu-Alles, V2X, angewendet wird und umfassend:
Erfassen (S202), durch eine erste Basisstation, einer Kommunikationsressource Gerät-zu-Gerät, D2D, einer zweiten Basisstation oder einer D2D-Kommunikationsressource der ersten Basisstation an sich, wobei die D2D-Kommunikationsressource eine PC5-Kommunikationsressource ist, die für die V2X verwendet wird; und
Senden (S204), durch eine erste Basisstation, der erfassten D2D-Kommunikationsressource durch die erste Basisstation an ein Benutzergerät (UE);
wobei die D2D-Kommunikationsressource einen D2D-Kommunikations-Ausnahmeübertragungs-Ressourcenpool umfasst;
wobei der D2D-Kommunikations-Ausnahmeübertragungs-Ressourcenpool für die Verwendung durch das UE unter einer der folgenden Bedingungen ist: ein Ausfall einer drahtlosen Verbindung in dem UE, Ausführen von T310, Ausführen von T304, ein Übergabefehler in dem UE oder Zeitüberschreitung von T304, Zellen-Neuauswahl des UE oder Ausführen von T311, Verbindungswiederaufbau von Funkressourcensteuerung, RRC, des UE oder Ausführen von T301, Ausführen von T300 oder RRC-Verbindungsaufbau des UE oder ein durch Zeitüberschreitung von T300 verursachter Verbindungsaufbau-Fehler.

2. Verfahren nach Anspruch 1, wobei das Erfassen, durch die erste Basisstation, der D2D-Kommunikationsressource der zweiten Basisstation Folgendes umfasst:
Erfassen, durch die erste Basisstation, der D2D-Kommunikationsressource der zweiten Basisstation mittels einer Übergabeanforderungsbestätigungsnachricht der X2-Schnittstelle; oder
Erfassen, durch die erste Basisstation, der D2D-Kommunikationsressource der zweiten Basisstation mittels einer Aufbauanforderung der X2-Schnittstelle oder einer Aufbauantwortnachricht der X2-Schnittstelle; oder
Erfassen, durch die erste Basisstation, der D2D-Kommunikationsressource der zweiten Basisstation über eine Basisstationskonfiguration-Aktualisierungsnachricht einer X2-Schnittstelle; oder
Erfassen, durch die erste Basisstation, der D2D-Kommunikationsressource der zweiten Basisstation über eine Konfigurationsaktualisierungsnachricht einer Mobilitätsmanagement-Einheit, MME, einer S1-Schnittstelle oder eine S1-Einrichtungsanforderungsnachricht oder eine S1-Übergabebefehlsnachricht.

3. Verfahren nach Anspruch 1, wobei das Senden, durch die erste Basisstation, der erfassten D2D-Kommunikationsressource an das UE Folgendes umfasst:
Senden, durch die erste Basisstation, der erfassten D2D-Kommunikationsressource an das UE durch eine RRC-Verbindungsneukonfigurationsnachricht; oder
Senden, durch die erste Basisstation, der erfassten D2D-Kommunikationsressource an das UE über eine Systemausstrahlungsnachricht, wobei die Systemausstrahlungsnachricht mindestens eines von Folgenden umfasst: eine Systemnachricht SIB 18 oder eine neu definierte Systemnachricht.

4. Verfahren nach Anspruch 3, wobei das Senden, durch die erste Basisstation, der erfassten D2D-Kommunikationsressource an das UE durch die RRC-Verbindungsneukonfigurationsnachricht Folgendes umfasst:
Senden, durch die erste Basisstation, der D2D-Kommunikationsressource, die von einer übergabeanforderungsbestätigungsnachricht einer X2-Schnittstelle erworben wird und in einem Übergabebefehl enthalten ist, durch die RRC-Verbindungsneukonfigurationsnachricht an das UE.

5. Verfahren nach Anspruch 1, ferner umfassend:
vor Senden, durch die erste Basisstation, der erfassten D2D-Kommunikationsressource an das UE,
Empfangen, durch die erste Basisstation, von Angabeinformationen über ein Interesse an einer D2D Internet-der-Fahrzeuge-Übertragung oder Angabeinformationen über D2D Pfadumschaltung, die durch das UE gesendet werden.

6. Verfahren nach einem der Ansprüche 1 bis 5, wobei das Benutzergerät mindestens eines von Folgenden umfasst: ein Fahrzeug-UE, ein Fußgänger-UE, ein UE vom Typ Straßenseiteneinheit, RSU, oder ein UE mit D2D-Kommunikationsfähigkeit, und/oder wobei die erste Basisstation und die zweite Basisstation mindestens eines von Folgenden umfassen: eine konventionelle Basisstation oder eine Basisstation vom Typ Straßenseiteneinheit, RSU.

7. Verfahren zur Ressourcenkonfiguration, das auf die Kommunikation Fahrzeug-zu-Alles, V2X, angewendet wird und umfassend:
Empfangen (S302), durch ein Benutzergerät, UE, einer Kommunikationsressource Gerät-zu-Gerät, D2D, die durch eine erste Basisstation gesendet wird, wobei die D2D-Kommunikationsressource eine D2D-Kommunikationsressource der ersten Basisstation an sich oder eine D2D-Kommunikationsressource einer zweiten Basisstation umfasst, wobei die D2D-Kommunikationsressource eine für die V2X verwendete PC5-Kommunikationsressource ist; und
Ausführen (S304), durch das UE, einer D2D-Kommunikationsinformationsübertragung und/oder eines D2D-Kommunikationsinformationsempfangs gemäß der empfangenen D2D-Kommunikationsressource;
wobei die D2D-Kommunikationsressource einen D2D-Kommunikations-Ausnahmeübertragungs-Ressourcenpool umfasst;
wobei das Ausführen, durch das UE, der D2D-Kommunikationsinformationsübertragung und/oder des D2D-Kommunikationsinformationsempfangs gemäß der empfangenen D2D-Kommunikationsressource Folgendes umfasst:
Verwenden, durch das UE, des D2D-Kommunikations-Ausnahmeübertragungsressourcenpools unter einer der folgenden Bedingungen:
ein Ausfall einer drahtlosen Verbindung in dem UE, Ausführen von T310, Ausführen von T304, ein Übergabefehler in dem UE oder Zeitüberschreitung von T304, Zellen-Neuauswahl des UE oder Ausführen von T311, Verbindungswiederaufbau von Funkressourcensteuerung, RRC, des UE oder Ausführen von T301, Ausführen von T300 oder RRC-Verbindungsaufbau des UE oder ein durch Zeitüberschreitung von T300 verursachter Verbindungsaufbau-Fehler.

8. Verfahren nach Anspruch 7, ferner umfassend:
vor Empfangen, durch das UE, der von der ersten Basisstation gesendeten D2D-Kommunikationsressource,
Senden, durch das UE, von Angabeinformationen über eine D2D-Pfadumschaltung oder von Angabeinformationen über ein Interesse an einer D2D Internet-der-Fahrzeuge-Übertragung an die erste Basisstation.

9. Verfahren nach Anspruch 8, wobei das Benutzergerät die Angabeinformationen der D2D-Pfadumschaltung oder die Angabeinformationen über ein Interesse an einer D2D-Internet-der-Fahrzeuge-Übertragung durch SidelinkUE-Informationen an die erste Basisstation sendet.

10. Vorrichtung zur Ressourcenkonfiguration, wobei die Vorrichtung konfiguriert ist, um auf eine erste Basisstation angewendet zu werden, wobei die Ressourcenkonfiguration für die Kommunikation Fahrzeug-zu-Alles, V2X, anwendbar ist und die Vorrichtung umfassend:
ein Erfassungsmodul (42), das konfiguriert ist, um eine Kommunikationsressource Gerät-zu-Gerät, D2D, einer zweiten Basisstation oder einer D2D-Kommunikationsressource der ersten Basisstation an sich zu erfassen, wobei die D2D-Kommunikationsressource eine PC5-Kommunikationsressource ist, die für die V2X verwendet wird; und
ein Sendemodul (44), das konfiguriert ist, um die erfasste D2D-Kommunikationsressource an ein Benutzergerät, UE, zu senden,
wobei die D2D-Kommunikationsressource einen D2D-Kommunikations-Ausnahmeübertragungs-Ressourcenpool umfasst;
wobei der D2D-Kommunikations-Ausnahmeübertragungs-Ressourcenpool für die Verwendung durch das UE unter einer der folgenden Bedingungen ist: ein Ausfall einer drahtlosen Verbindung in dem UE, Ausführen von T310, Ausführen von T304, ein Übergabefehler in dem UE oder Zeitüberschreitung von T304, Zellen-Neuauswahl des UE oder Ausführen von T311, Verbindungswiederaufbau von Funkressourcensteuerung, RRC, des UE oder Ausführen von T301, Ausführen von T300 oder RRC-Verbindungsaufbau des UE oder ein durch Zeitüberschreitung von T300 verursachter Verbindungsaufbau-Fehler.

11. Vorrichtung zur Ressourcenkonfiguration, wobei die Vorrichtung konfiguriert ist, um auf ein Benutzergerät, UE, angewendet zu werden, wobei die Ressourcenkonfiguration für die Kommunikation Fahrzeug-zu-Alles, V2X, anwendbar ist und die Vorrichtung umfassend:
ein Empfangsmodul (52), das konfiguriert ist, um eine von einer ersten Basisstation gesendete Kommunikationsressource Gerät-zu-Gerät, D2D, zu empfangen, wobei die D2D-Kommunikationsressource eine D2D-Kommunikationsressource der ersten Basisstation an sich oder eine D2D-Kommunikationsressource einer zweiten Basisstation umfasst, wobei die D2D-Kommunikationsressource eine für die V2X verwendete PC5-Kommunikationsressource ist; und
ein Konfigurationsmodul (54), das konfiguriert ist, um eine D2D-Kommunikationsinformationsübertragung und/oder einen D2D-Kommunikationsinformationsempfang gemäß der empfangenen D2D-Kommunikationsressource auszuführen,
wobei die D2D-Kommunikationsressource einen D2D-Kommunikations-Ausnahmeübertragungs-Ressourcenpool umfasst;
wobei der Betrieb des Konfigurationsmoduls (54) eines Ausführens von D2D-Kommunikationsinformationsübertragung und/oder D2D-Kommunikationsinformationsempfang gemäß der empfangenen D2D-Kommunikationsressource Folgendes umfasst:
Verwenden des D2D-Kommunikations-Ausnahmeübertragungs-Ressourcenpool unter einer der folgenden Bedingungen: Ausfall einer drahtlosen Verbindung in dem UE, Ausführen von T310, Ausführen von T304, Übergabefehler in dem UE oder Zeitüberschreitung von T304, Zellen-Neuauswahl des UE oder Ausführen von T311, Verbindungswiederaufbau von Funkressourcensteuerung, RRC, des UE oder Ausführen von T301, Ausführen von T300 oder RRC-Verbindungsaufbau des UE oder ein durch Zeitüberschreitung von T300 verursachter Verbindungsaufbau-Fehler.

## Revendications

1. Procédé de configuration de ressources, appliqué aux communications de véhicule avec tout, V2X, et comprenant :
l'acquisition (S202), par une première station de base, d'une ressource de communication de dispositif à dispositif, D2D, d'une seconde station de base ou d'une ressource de communication D2D de la première station de base elle-même, dans laquelle la ressource de communication D2D est une ressource de communication PC5 utilisée pour le V2X ; et
l'envoi (S204), par la première station de base, de la ressource de communication D2D acquise à un équipement utilisateur, UE ;
dans lequel la ressource de communication D2D comprend un ensemble de ressources de transmission exceptionnelle de communication D2D ;
dans lequel l'ensemble de ressources de transmission exceptionnelle de communication D2D est destiné à être utilisé par l'UE dans l'une quelconque des conditions suivantes : une défaillance de la liaison sans fil dans l'UE, l'exécution de T310, l'exécution de T304, une défaillance du transfert dans l'UE ou le dépassement du délai de T304, la resélection cellulaire de l'UE ou l'exécution de T311, le rétablissement de la connexion RRC (Radio Resource Control) de l'UE ou l'exécution de T301, l'exécution de T300, ou l'établissement de la connexion RRC de l'UE ou une défaillance de l'établissement de la connexion provoquée par le dépassement du délai de T300.

2. Procédé selon la revendication 1, dans lequel l'acquisition, par la première station de base, de la ressource de communication D2D de la seconde station de base comprend :
l'acquisition, par la première station de base, de la ressource de communication D2D de la seconde station de base par le biais d'un message d'accusé de réception de demande de transfert d'interface X2 ; ou
l'acquisition, par la première station de base, de la ressource de communication D2D de la seconde station de base par le biais d'une demande d'établissement d'interface X2 ou d'un message de réponse d'établissement d'interface X2 ; ou
l'acquisition, par la première station de base, de la ressource de communication D2D de la seconde station de base par le biais d'un message de mise à jour de la configuration de la station de base d'une interface X2 ; ou
l'acquisition, par la première station de base, de la ressource de communication D2D de la seconde station de base par le biais d'un message de mise à jour de la configuration de l'entité de gestion de la mobilité, MME, d'une interface S1 ou d'un message de demande d'établissement S1 ou d'un message de commande de transfert S1.

3. Procédé selon la revendication 1, dans lequel l'envoi, par la première station de base, de la ressource de communication D2D acquise à l'UE comprend :
l'envoi, par la première station de base, de la ressource de communication D2D acquise à l'UE par le biais d'un message de reconfiguration de connexion RRC ; ou
l'envoi, par la première station de base, de la ressource de communication D2D acquise à l'UE par l'intermédiaire d'un message de diffusion de système, dans lequel le message de diffusion de système comprend au moins l'un des éléments suivants : un message de système SIB 18 ou un message de système nouvellement défini.

4. Procédé selon la revendication 3, dans lequel l'envoi, par la première station de base, de la ressource de communication D2D acquise à l'UE par le biais du message de reconfiguration de connexion RRC comprend :
l'envoi, par la première station de base, de la ressource de communication D2D acquise à partir d'un message d'accusé de réception de demande de transfert d'interface X2 et contenue dans une commande de transfert à l'UE par le biais du message de reconfiguration de connexion RRC.

5. Procédé selon la revendication 1, comprenant en outre :
avant d'envoyer, par la première station de base, la ressource de communication D2D acquise à l'UE,
la réception, par la première station de base, d'informations d'indication concernant un intérêt pour une transmission D2D par l'Internet des véhicules ou d'informations d'indication d'un changement de voie D2D, envoyées par l'UE.

6. Procédé selon l'une quelconque des revendications 1 à 5, dans lequel l'UE comprend au moins un élément parmi : un UE de véhicule, un UE de piéton, une unité de bord de route de type UE, RSU, ou un UE doté d'une capacité de communication D2D, et/ou dans lequel la première station de base et la seconde station de base comprennent au moins un élément parmi : une station de base traditionnelle ou une unité de bord de route de type station de base, RSU.

7. Procédé de configuration de ressources appliqué aux communications de véhicule avec tout, V2X, et comprenant :
la réception (S302), par un équipement utilisateur, UE, d'une ressource de communication de dispositif à dispositif, D2D, envoyée par une première station de base, dans lequel la ressource de communication D2D comprend une ressource de communication D2D de la première station de base elle-même ou une ressource de communication D2D d'une seconde station de base, dans lequel la ressource de communication D2D est une ressource de communication PC5 utilisée pour le V2X ; et
l'exécution (S304), par l'UE, d'une émission d'informations de communication D2D et/ou d'une réception d'informations de communication D2D selon la ressource de communication D2D reçue ;
dans lequel la ressource de communication D2D comprend un ensemble de ressources de transmission exceptionnelle de communication D2D ;
dans lequel la réalisation, par l'UE, de l'émission d'informations de communication D2D et/ou de la réception d'informations de communication D2D selon la ressource de communication D2D reçue comprend :
l'utilisation, par l'UE, de l'ensemble de ressources d'émission exceptionnelle de communication D2D dans l'une quelconque des conditions suivantes :
une défaillance de la liaison sans fil dans l'UE, l'exécution de T310, l'exécution de T304, une défaillance du transfert dans l'UE ou le dépassement du délai de T304, la resélection cellulaire de l'UE ou l'exécution de T311, le rétablissement de la connexion RRC (Radio Resource Control) de l'UE ou l'exécution de T301, l'exécution de T300, ou l'établissement de la connexion RRC de l'UE ou une défaillance de l'établissement de la connexion causée par le dépassement du délai de T300.

8. Procédé selon la revendication 7, comprenant en outre :
avant de recevoir, par l'UE, la ressource de communication D2D envoyée par la première station de base,
l'envoi, par l'UE, d'informations d'indication de changement de voie D2D ou d'informations d'indication concernant un intérêt pour une transmission D2D par l'Internet des véhicules à la première station de base.

9. Procédé selon la revendication 8, dans lequel l'UE envoie les informations d'indication de changement de voie D2D ou les informations d'indication concernant un intérêt pour une transmission D2D Internet des véhicules à la première station de base par le biais d'informations sidelinkUE.

10. Appareil de configuration de ressources, l'appareil étant configuré pour être appliqué à une première station de base, la configuration de ressources étant applicable aux communications de véhicule avec tout, V2X, et l'appareil comprenant :
un module d'acquisition (42), configuré pour acquérir une ressource de communication de dispositif à dispositif, D2D, d'une seconde station de base ou une ressource de communication D2D de la première station de base elle-même, dans lequel la ressource de communication D2D est une ressource de communication PC5 utilisée pour le V2X ; et
un module d'envoi (44), configuré pour envoyer la ressource de communication D2D acquise à un équipement utilisateur, UE,
dans lequel la ressource de communication D2D comprend un ensemble de ressources de transmission exceptionnelle de communication D2D ;
dans lequel l'ensemble de ressources de transmission exceptionnelle de communication D2D est destiné à être utilisé par l'UE dans l'une quelconque des conditions suivantes : une défaillance de la liaison sans fil dans l'UE, l'exécution de T310, l'exécution de T304, une défaillance du transfert dans l'UE ou le dépassement du délai de T304, la resélection cellulaire de l'UE ou l'exécution de T311, le rétablissement de la connexion RRC (Radio Resource Control) de l'UE ou l'exécution de T301, l'exécution de T300, ou l'établissement de la connexion RRC de l'UE ou une défaillance de l'établissement de la connexion provoquée par le dépassement du délai de T300.

11. Appareil pour la configuration de ressources, l'appareil étant configuré pour être appliqué à un équipement utilisateur, UE, la configuration de ressources étant applicable aux communications de véhicule à véhicule, V2X, et l'appareil comprenant :
un module de réception (52), configuré pour recevoir une ressource de communication de dispositif à dispositif, D2D, envoyée par une première station de base, dans lequel la ressource de communication D2D comprend une ressource de communication D2D de la première station de base elle-même ou une ressource de communication D2D d'une seconde station de base, dans lequel la ressource de communication D2D est une ressource de communication PC5 utilisée pour le V2X ; et
un module de configuration (54), configuré pour effectuer une émission d'informations de communication D2D et/ou une réception d'informations de communication D2D en fonction de la ressource de communication D2D reçue,
dans lequel la ressource de communication D2D comprend un ensemble de ressources de transmission exceptionnelle de communication D2D ;
dans lequel l'opération du module de configuration (54) consistant à effectuer une émission d'informations de communication D2D et/ou une réception d'informations de communication D2D en fonction de la ressource de communication D2D reçue comprend :
l'utilisation de l'ensemble de ressources de transmission exceptionnelle de communication D2D dans l'une quelconque des conditions suivantes : une défaillance de la liaison sans fil dans l'UE, l'exécution de T310, l'exécution de T304, une défaillance du transfert dans l'UE ou le dépassement du délai de T304, la resélection de cellule de l'UE ou l'exécution de T311, le rétablissement de la connexion RRC (Radio Resource Control) de l'UE ou l'exécution de T301, l'exécution de T300, ou l'établissement de la connexion RRC de l'UE ou un échec de l'établissement de la connexion causé par le dépassement du délai de T300.
